# EUROPÄISCHE PATENTSCHRIFT

(11) **EP 2 357 120 B1**
(45) Veröffentlichungstag und Bekanntmachung des Hinweises auf die Patenterteilung: **07.06.2017**
(21) Anmeldenummer: 11000777.0
(22) Anmeldetag: 01.02.2011
(51) Int. Cl.: B62D 25/02, B62D 25/20

(54) **Tragstruktur einer Fahrzeugkarosserie im schwellerseitigen Bereich einer C-Säule**
Support structure of a vehicle body in door sill area of a C pillar
Structure de support d'une carrosserie de véhicule dans la zone du côté du rail d'un montant C

(30) Priorität: 03.02.2010 DE 102010006672
(43) Veröffentlichungstag der Anmeldung: 17.08.2011
(73) Patentinhaber: Audi AG, 85045 Ingolstadt (DE)
(72) Erfinder: Schromm, Martin, 85080 Gaimersheim (DE); Weigl, Willibald, 85095 Zandt (DE); Kühl, Sönke, 69120 Heidelberg (DE); Oleff, Nils, 85049 Ingolstadt (DE)
(74) Vertreter: Engelhardt, Harald

(56) Entgegenhaltungen:
- EP-A1- 1 099 584
- EP-A2- 1 790 552
- DE-A1-102004 049 033
- US-A- 5 352 011

## Beschreibung

Die Erfindung betrifft eine Tragstruktur einer Fahrzeugkarosserie im schwellerseitigen Bereich einer C-Säule nach dem Oberbegriff des Anspruchs 1.

Eine derartige Tragstruktur schließt regelmäßig an eine sogenannte Schwellerbaugruppe für eine selbsttragende Karosserie eines Fahrzeugs an. Beispielsweise befindet sich eine derartige Schwellerbaugruppe unterhalb des Türeinstiegs, auf beiden Seiten des Fahrzeugs, zwischen den Radkästen vorne und hinten. Der Schwellerbaugruppe kommt zum Beispiel bei einem Seitenaufprall eine wesentliche Bedeutung bei der Aufnahme von Lastpfaden zu. So ist es bei einem Seitenaufprall wichtig, im Bereich des Schwellers keine zu hohe Steifigkeit auszubilden, um die Aufprallenergie gezielt abbauen zu können und damit die Eindringgeschwindigkeiten reduzieren zu können. Der Schweller ist regelmäßig kein eigenes Bauteil und setzt sich aus einem Seitenteil, einem Verstärkungsteil und einem Schwellerinnenteil zusammen, welche ein Hohlprofil ausbilden.

Aus der DE 10 2004 049 033 A1 ist bereits eine Tragstruktur eines Endbereichs einer Fahrzeugkarosserie bekannt, mittels der im Endbereich der Fahrzeugkarosserie für eine Aufpralllast drei Lastpfade in Fahrzeuglängsrichtung zur Verfügung gestellt werden, über die sich die Belastungen vorteilhaft verteilen können. Konkret ist hierzu die Tragstruktur mit seitlichen Verbindungslängselementen ausgebildet, welche jeweils einen Verbindungsabschnitt aufweisen. Ferner sind seitliche Dachrahmen-Längselemente vorgesehen, die in der Fahrgastzelle abgewandten Enden in Richtung der Verbindungsabschnitte der seitlichen Verbindungselemente abfallen. Schließlich sind seitliche Heckverstärkungsträger vorgesehen, welche jeweils von einem Karosseriebodenbereich ausgehend in Richtung der zugeordneten abfallenden Enden der seitlichen Dachrahmen-Längselemente verlaufen, wobei die seitlichen Heckverstärkungsträger und die seitlichen Dachrahmen-Längselemente jeweils über die zugeordneten Verbindungsabschnitte der seitlichen Verbindungslängselemente derart miteinander gekoppelt sind, dass die seitlichen Verbindungslängselemente jeweils in etwa eine Verlängerung der Dachrahmen-Längselemente bilden. Ein seitliches Ende des Heckquerträgers, ein zugeordnetes Ende des seitlichen Bodenlängsträgers und ein zugeordnetes Ende des seitlichen Heckverstärkungsträgers sind über einen Pralltopf miteinander verbunden. Dadurch wird ein erster Lastpfad zur Verfügung gestellt, bei dem die Kraft über die Pralltöpfe auf die seitlichen Bodenlängsträger aufgenommen werden. Ein zweiter Lastpfad ergibt sich durch Aufnahme der Kraft über die Pralltöpfe, weiter über die Heckverstärkungsträger, welche in den seitlichen Verbindungslängselementen enden. Und ein dritter Lastpfad ergibt sich bei einer Kraftaufnahme über die Pralltöpfe, einem Teil der Heckverstärkungsträger und aufgrund der Anbringung an den Verbindungsabschnitten der Verbindungslängselemente weiter über die seitlichen Dachrahmen-Längselemente.

Aufgabe der vorliegenden Erfindung ist es, eine Tragstruktur einer Fahrzeugkarosserie im schwellerseitigen Bereich einer C-Säule zur Verfügung zu stellen, mittels der auf einfache und kostengünstige Weise das Deformationsverhalten und die Steifigkeit im schwellerseitigen Knotenbereich einer C-Säule verbessert werden kann.

Diese Aufgabe wird gelöst mit den Merkmalen des Patentanspruchs 1. Vorteilhafte Ausgestaltungen sind Gegenstand der darauf rückbezogenen Unteransprüche.

Erfindungsgemäß wird eine Tragstruktur einer Fahrzeugkarosserie im schwellerseitigen Bereich einer C-Säule vorgeschlagen, bei der erfindungsgemäß vorgesehen ist, dass zur Ausbildung eines ersten schwellerseitigen Lastpfades der in Fahrzeuglängsrichtung gesehen hintere Bodenlängsträger, schwellerseitig gesehen, an der C-Säule angebunden ist und sich von dort ausgehend nach vorne in Richtung Fahrgastzelle erstreckt sowie dort mit einem Schwellerinnenteil verbunden ist. An der C-Säule ist weiter, insbesondere gegenüberliegend zum hinteren Bodenlängsträger, ein C-Säulenverstärkungselement angebunden, das die C-Säule wenigstens bereichsweise abdeckt und/oder verstärkt und das zur Ausbildung eines zweiten schwellerseitigen Lastpfades schwellerseitig mit einem weiteren Schwellerbauteil verbunden ist.
Dadurch wird eine Tragstruktur einer Fahrzeugkarosserie im Übergangsbereich von einem Schweller in den hinteren Bodenlängsträger und die C-Säule mit zwei im Crashfall redundant wirkenden Lastpfaden zur Verfügung gestellt, die die zum Beispiel bei einem Seitenaufprall auf den Schweller wirkenden Kräfte in den Hinterwagen einleiten bzw. auch nach vorne über die Fahrgastzelle ableiten, wodurch ein optimiertes Deformationsverhalten und damit ein gezielter Energieabbau bei gleichzeitig hoher Steifigkeit des unteren C-Säulenknotenbereichs erreicht wird.

Erfindungsgemäß ist vorgesehen, dass das mit dem C-Säulenverstärkungselement verbundene weitere Schwellerbauteil durch ein Schwellerverlängerungselement gebildet ist, das entweder materialeinheitlich und einstückig in ein Schwellerverstärkungselement übergeht oder das bevorzugt als separates Bauteil ausgebildet ist und mit einem Schwellerverstärkungselement mittelbar oder unmittelbar verbunden ist. Bevorzugt ist dabei das Schwellerverlängerungselement unmittelbar mit dem Schwellerverstärkungselement verbunden, so dass dieses als vormontierte Baugruppe mit dem Schwellerinnenteil verbunden werden kann. Mit einem derartigen Aufbau wird ein insgesamt stabiler Schwellerverbund geschaffen, wobei Bauteile des ersten schwellerseitigen Lastpfades gleichzeitig mit Bauteilen des zweiten schwellerseitigen Lastpfades verbunden werden und dadurch in einer vorteilhaften Doppelfunktion sowohl Lastpfadunktionen als auch Versteifungsfunktionen erfüllen können. Besonders bevorzugt ist hierbei eine Ausgestaltung, bei der sich das Schwellerverstärkungselement im Wesentlichen in etwa über die Länge des Schwellerinnenteils erstreckt, während sich das Schwellerverlängerungselement wenigstens teilweise entlang des hinteren Bodenlängsträgers, vorzugsweise bis zur C-Säule erstreckt und mit diesem und/oder mit der C-Säule verbunden ist.

Fertigungs- und montagetechnisch besonders günstig ist die erfinderische Ausgestaltung, bei der das Schwellerverlängerungselement vom C-Säulenverstärkungselement wenigstens im C-säulennahen Bereich wenigstens bereichsweise und/oder formschlüssig umgriffen oder übergriffen ist, insbesondere in einer rohrförmigen Aufnahme abgestützt und/oder gehaltert ist. Mit einem derartigen Aufbau können somit sämtliche Bestandteile des zweiten schwellerseitigen Lastpfades bildenden Bauteile (C-Säulenverstärkungselement, Schwellerverlängerungselement und Schwellerverstärkungselement) als Baugruppe vormontiert und an der Fahrzeugkarosserie verbaut werden.

Für eine besonders stabile Verbindung zwischen den einzelnen Bauteilen ist bevorzugt vorgesehen, dass die miteinander zu verbindenden Bauteile im Verbindungsbereich, dort wo dies konstruktiv möglich ist, in einer flächigen Anlageverbindung aneinander liegen und/oder einander in einer flächigen Anlageverbindung überlappen.

Eine besonders vorteilhafte Versteifung wird dann erreicht, wenn sich das C-Säulenverstärkungselement am C-Säulenbereich im Wesentlichen bis zum Dachbereich erstreckt. Hier wird dann eine stabile Abstützung und Versteifung der C-Säule sichergestellt, die in Verbindung mit dem zweiten schwellerseitigen Lastpfad in Verbindung mit einer Vielzahl von Aufprallsituationen einen gewünschten Kraftfluss bzw. eine gewünschte Kraftableitung sicherstellt.

Als crashtechnisch besonders günstig hat es sich erwiesen, wenn der hintere Bodenlängsträger und das Schwellerseitenteil gemäß einer bevorzugten Ausgestaltung im Bereich der B-Säule der Fahrzeugkarosserie miteinander verbunden sind. Insbesondere in diesem Fall ist es von besonderem Vorteil, wenn die B-Säule der Fahrzeugkarosserie gemäß einer weiteren besonders bevorzugten Ausgestaltung der vorliegenden Erfindungsidee schwellerseitig an das weitere Schwellerbauteil angebunden ist. Dabei liegt der untere B-Säulenbereich der B-Säule vorzugsweise von außen her am zugeordneten Schwellerbereich an, das heißt, er ist auf der, bezogen auf das weitere Schwellerbauteil, gegenüberliegenden Seite des hinteren Bodenlängsträger/Schwellerinnenteil-Verbundes angeordnet, so dass das weitere Schwellerbauteil zwischen diesen beiden Bauteilen bzw. -bereichen liegt. Auch dies ist sowohl kraftflusstechnisch und damit crashtechnisch als auch montagetechnisch vorteilhaft, da hierdurch auch im Bereich der B-Säule eine besonders steife Konstruktion zur Verfügung gestellt wird, die Bestandteil der beiden Lastpfade ist und somit eine Kraftableitung auch über die B-Säule ermöglicht.

Die Fahrzeugkarosserie selbst ist bevorzugt aus einem Stahlblech oder einem Leichtmetallblech, insbesondere einem Aluminiumblech, aufgebaut. Insbesondere in Verbindung mit der Ausbildung der Fahrzeugkarosserie aus einem Aluminiumblech ergibt sich der Vorteil einer gewichtsgünstigen Fahrzeugkarosserie, was sich zum Beispiel vorteilhaft auf den Kraftstoffverbrauch eines Fahrzeugs auswirkt.

Der hintere Bodenlängsträger ist bevorzugt als Gussteil ausgebildet, vorzugsweise als Leichtmetall-Gussteil, höchst bevorzugt als Aluminium-Gussteil, wodurch für ein relativ langes und/oder großvolumiges Bauteil ein besonders gewichtsgünstiger Aufbau zur Verfügung gestellt wird. Dieser durch ein Gussteil gebildete hintere Bodenlängsträger ist bevorzugt mit einem Schwellerinnenteil aus einem Stahlblech, insbesondere aus einem warmgeformten Stahlblech verbunden. Mit einem derartigen warmgeformten Stahlblech als Schwellerinnenteil wird ein besonders hochfestes Bauteil ausgebildet, das der Schwellerbaugruppe eine besonders hohe Festigkeit und Tragfähigkeit verleiht.

Das weitere Schwellerbauteil, insbesondere das Schwellverlängerungselement und das Schwellerverstärkungselement, sind bevorzugt ebenfalls aus einem Stahlblech, und zwar bevorzugt aus einem hochfesten, kaltgeformten Stahlblech hergestellt. Mit einem derartigen kaltgeformten Stahlblech aufweist, das regelmäßig eine geringere Festigkeit als ein warmgeformtes Stahlblech aufweist, wird ein einfaches und kostengünstiges Bauteil geschaffen, das zudem an unterschiedlichste, auch Hinterschneidungen aufweisende Geometrien anpassbar ist und das somit einfachst an die jeweils vorherrschenden konstruktiven Einbaubedingungen angepasst werden kann.

Das relativ großflächige C-Säulenverstärkungselement ist wiederum bevorzugt aus einem gewichtsgünstigen Leichtmetallblech, insbesondere aus einem Aluminiumblech, hergestellt.

Mit einem derartigen Materialmix lässt sich eine besonders gewichtsgünstig und hinsichtlich der Steifigkeitsanforderungen optimierte Tragstruktur einer Fahrzeugkarosserie im schwellerseitigen Bereich einer C-Säule realisieren, die ein hervorragendes Deformationsverhalten aufweist und zudem mittels der schwellerseitigen Lastpfade eine hervorragende sowie funktionssichere Kraftableitung ermöglicht.

Bevorzugt ist vorgesehen, dass diejenigen miteinander zu verbindenden Bauteile, die aus unterschiedlichen Werkstoffen hergestellt sind, mittels einer Niet- und/oder Klebeverbindung miteinander verbunden sind, insbesondere sowohl mit einer Nietverbindung als auch mit einer Klebeverbindung miteinander verbunden sind. Mit einer Nietverbindung lässt sich auf einfache und fertigungstechnisch günstige Weise eine hochfeste Verbindung zwischen den beiden Bauteilen realisieren, insbesondere dort wo keine Schweißverbindung aufgrund der unterschiedlichen Werkstoffe möglich ist. Der zusätzliche Einsatz von Klebstoff bewirkt dabei eine noch festere Verbindung zwischen den beiden Bauteilen, wobei gleichzeitig durch den Einsatz einer Klebeverbindung auch eine gewünschte Dichtigkeit zwischen einzelnen zu verbindenden Bauteilen und damit eine Hohlraumversiegelung erfolgen kann.

Bauteile aus einem im Wesentlichen gleichen Werkstoff können grundsätzlich ebenfalls mittels einer derartigen Niet- und/oder Klebeverbindung miteinander verbunden werden. Hier eignet sich jedoch gegebenenfalls auch der Einsatz eines Schweißverfahrens, um die beiden Bauteile mittels Schweißen miteinander zu verbinden.

Die Erfindung wird nachfolgend anhand einer Zeichnung näher erläutert.

Es zeigen:
- Fig. 1: schematisch eine Seitenansicht einer seitlichen Tragstruktur einer Fahrzeugkarosserie mit den Bauteilen eines ersten schwellerseitigen Lastpfades,
- Fig. 2: die seitliche Tragstruktur gemäß Fig. 1 von der anderen Seite mit den Bauteilen eines zweiten schwellerseitigen Lastpfades, und
- Fig. 3: schematisch eine vergrößerte Detailansicht der Bauteilanbindung im C-Säulenbereich gemäß Fig. 2.

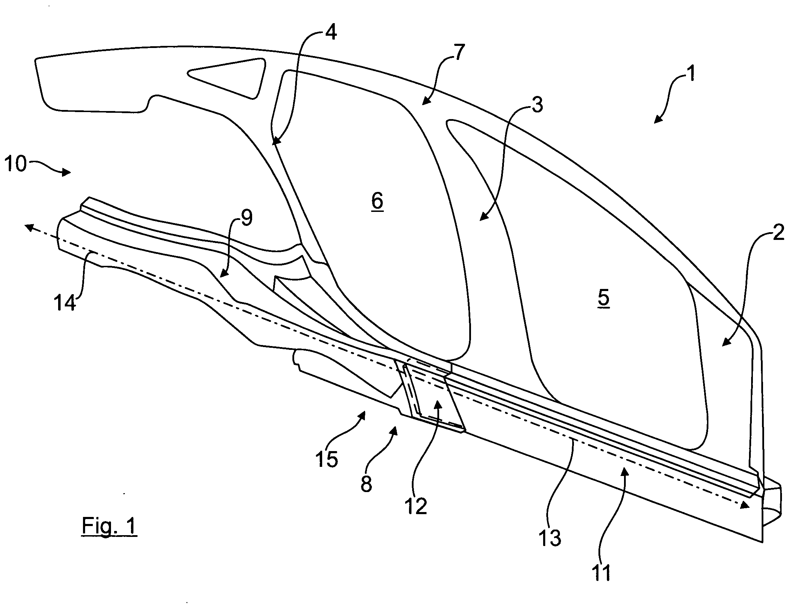

In der Fig. 1 ist schematisch und beispielhaft eine seitliche Tragstruktur 1 einer hier nicht vollständig dargestellten Fahrzeugkarosserie gezeigt, die eine A-Säule 2, eine B-Säule 3 und eine C-Säule 4 umfasst, die sich zwischen Türausschnitte 5, 6 einschließen.

Am in der Bildebene oberen Bereich der seitlichen Tragstruktur, die bevorzugt aus einem Aluminium, insbesondere aus einem Aluminiumblech hergestellt ist, verläuft ein Dachlängsträger 7, von dem ausgehend sich die A-Säule 2, die B-Säule 3 und die C-Säule 4 nach unten zu einem Bodenbereich 8 erstrecken.

In diesem Bodenbereich 8 verläuft ein hinterer Bodenlängsträger 9, der sich von einem heckseitigen Bereich 10 ausgehend über den unteren C-Säulenbereich hinaus bis nach vorne zum unteren B-Säulenbereich erstreckt und dort mit einem aus einem warmgeformten Stahl ausgebildeten Schwellerinnenteil 11 verbunden ist, was nachfolgend noch näher erläutert wird.

Der hintere Bodenlängsträger 9 ist mittels einer hier nicht dargestellten Niet- und Klebeverbindung mit der C-Säule 4 verbunden.

Wie dies aus der Fig. 1 weiter ersichtlich ist, umgreift und überlappt der hintere Bodenlängsträger 9 im Bereich der B-Säule 3 ein hinteres, freies, B-säulenseitiges Ende des Schwellerinnenteils 11. In diesem Überlappungsbereich liegt der hintere Bodenlängsträger bevorzugt in einer flächigen Anlageverbindung an dem Schwellerinnenteil 11 an und ist mit diesem mittels einer Niet- und Klebeverbindung verbunden. Es versteht sich, dass im Rahmen der vorliegenden Ausgestaltung jede Nietverbindung bevorzugt durch eine Mehrzahl von einzelnen, voneinander beabstandeten Nietpunkten gebildet ist, die bevorzugt durch Vollstanznieten hergestellt sind, wodurch sich eine besonders innige und feste Verbindung zwischen den miteinander zu verbindenden Bauteilen ergibt. Grundsätzlich ist jedoch auch der Einsatz von Halbhohlstanznieten möglich.

Das Schwellerinnenteil 11 ist dann wiederum im vorderen, A-säulenseitigen Endbereich mittels bevorzugt ebenfalls einer Niet- und Klebeverbindung an dem unteren A-Säulenbereich angebunden.

Wie dies schematisch durch die Pfeile 13 und 14 in der Fig. 1 eingezeichnet ist, ergibt sich durch diesen Bauteilverbund aus hinterem Bodenlängsträger 9 und Schwellerinnenteil 11 ein erster, schwellerseitiger Lastpfad im Falle eines zum Beispiel Seitenaufpralls auf den Schwellerbereich 15.

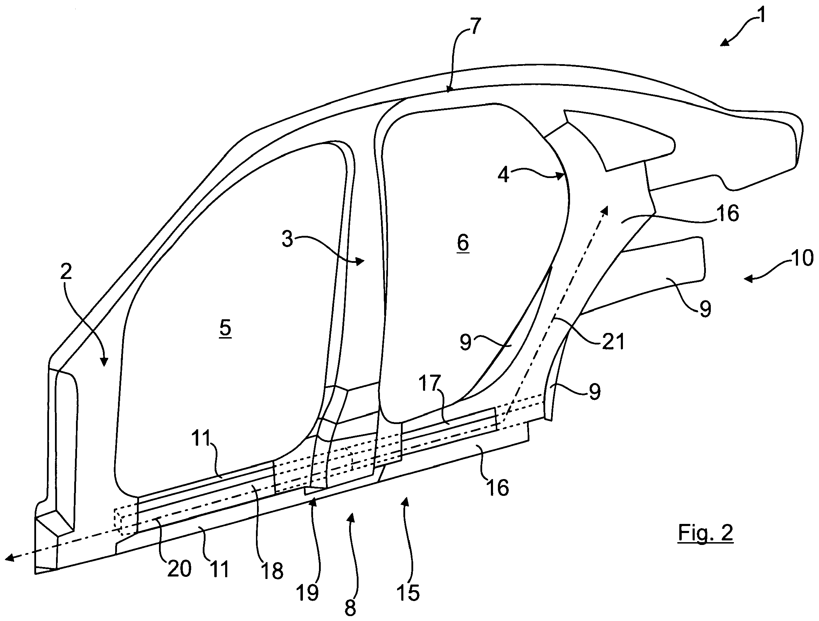

In der Fig. 2 ist eine um 180° gedrehte Darstellung der seitlichen Tragstruktur 1 gezeigt, aus der ersichtlich ist, dass an der C-Säule 4 weiter ein C-Säulenverstärkungselement 16 aus bevorzugt einem Aluminiumblech angebunden ist. Die Anbindung erfolgt hier bevorzugt wieder mittels einer Niet- und Klebeverbindung.

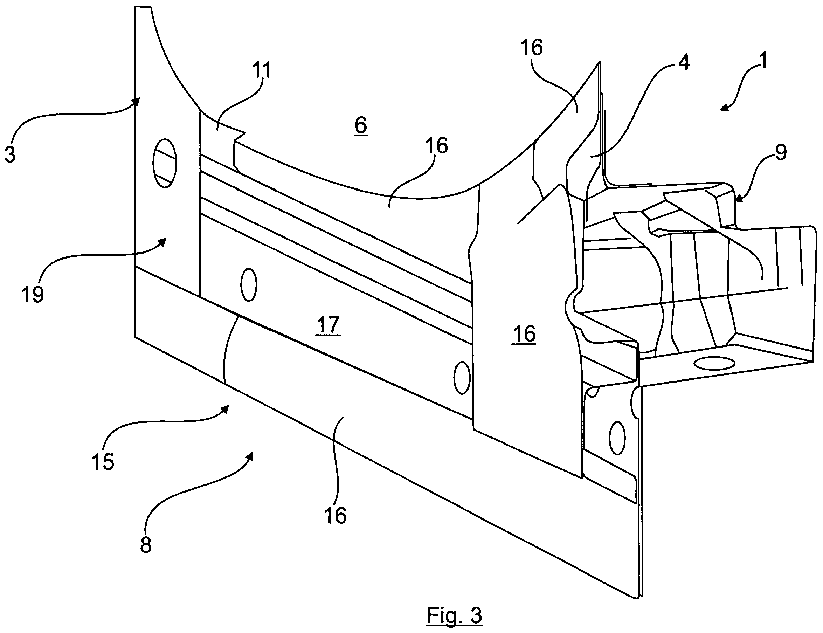

Das C-Säulenverstärkungselement 16 deckt dabei im Wesentlichen den gesamten C-Säulenbereich ab und erstreckt sich in etwa bis zum Dachlängsträger 7 nach oben. Des Weiteren erstreckt sich das C-Säulenverstärkungselement 16 nach unten über den unteren C-Säulenbereich hinaus in Richtung zur Fahrgastzelle nach vorne und ist dort mit einem aus einem hochfesten, kaltgeformten Stahlblech ausgebildeten Schwellerverlängerungselement 17 verbunden, zum Beispiel mittels einer Niet- und Klebeverbindung verbunden, wobei das C-Säulenverstärkungselement 16 das Schwellerverlängerungselement 17 endseitig, wie dies insbesondere aus der Fig. 3 ersichtlich ist, rohrförmig umgreift und überdeckt und somit quasi umschuht.

Das Schwellerverlängerungselement 17 ist im Bereich der B-Säule 3 mit einem ebenfalls aus einem hochfesten, kaltgeformten Stahlblech hergestellten Schwellerverstärkungselement 18 verbunden, und zwar mittels zum Beispiel einer Schweißverbindung oder aber auch einer Niet- und/oder Klebeverbindung.

Dieses Schwellerverstärkungselement 18 erstreckt sich bevorzugt über die gleiche Länge wie das Schwellerinnenteil 11 und ist mit diesem zum Beispiel mittels einer Niet- und Klebeverbindung verbunden. Mit einem vorderen, A-säulenseitigen Endbereich ist das Schwellerverstärkungselement 18 zudem bevorzugt mit der seitlichen Tragstruktur 1 verbunden, und zwar zum Beispiel wiederum mittels einer Niet- und Klebeverbindung.

Im B-säulenseitigen Verbindungsbereich von Schwellerverlängerungselement 17 und Schwellerverstärkungselement 18 ist ferner noch der B-Säulenbereich 19 von außen her sowohl am Schwellerverlängerungselement 17 als auch am Schwellerverstärkungselement 18 angebunden. Dadurch ergibt sich ein durch die Pfeile 20, 21 dargestellter, zweiter schwellerseitiger Lastpfad auf der gegenüberliegenden Seite des ersten schwellerseitigen Lastpfades, die im Crashfall redundant wirken und die Kräfte zum Beispiel in den Hinterwagen einleiten.

## Patentansprüche

1. Tragstruktur einer Fahrzeugkarosserie im schwellerseitigen Bereich einer C-Säule, mit einer C-Säule und einem in Fahrzeuglängsrichtung gesehen hinteren Bodenlängsträger, **dadurch gekennzeichnet, dass** zur Ausbildung eines ersten schwellerseitigen Lastpfades (13, 14), der in Fahrzeuglängsrichtung gesehen hintere und von einem heckseitigen Bereich (10) ausgehende Bodenlängsträger (9), schwellerseitig gesehen, an der C-Säule (4) angebunden ist und sich von dort ausgehend weiter nach vorne in Richtung Fahrgastzelle erstreckt und im Bereich der B-Säule (3) mit einem Schwellerinnenteil (11) dergestalt verbunden ist, dass der Bodenlängsträger (9) ein hinteres, freies, B-säulenseitiges Ende des Schwellerinnenteils (11) umgreift und überlappt, wobei sich das Schwellerinnenteil (11) weiter nach vorne zur A-Säule (2) erstreckt und dort an dem unteren A-Säulenbereich angebunden ist,
dass an der C-Säule (4) weiter, insbesondere gegenüberliegend zum hinteren Bodenlängsträger (9), ein C-Säulenverstärkungselement (16) angebunden ist, das die C-Säule (4) wenigstens bereichsweise abdeckt und/oder verstärkt und das zur Ausbildung eines zweiten schwellerseitigen Lastpfades (20, 21) mit einem weiteren Schwellerbauteil (17, 18) verbunden ist, wobei
das weitere Schwellerbauteil ein Schwellerverlängerungselement (17) ist, das materialeinheitlich und einstückig in ein Schwellerverstärkungselement (18) übergeht oder das als separates Bauteil mit einem Schwellerverstärkungselement (18) mittelbar oder unmittelbar verbunden ist, und wobei
das Schwellerverstärkungselement (18) mit dem Schwellerinnenteil (11) und/oder mit der A-Säule (2) der Fahrzeugkarosserie verbunden ist, und dass das Schwellerverlängerungselement (17) vom C-Säulenverstärkungselement (16) wenigstens im C-säulennahen Bereich bereichsweise und/oder formschlüssig umgriffen oder übergriffen ist.

2. Tragstruktur nach Anspruch 1, **dadurch gekennzeichnet, dass** sich das Schwellerverstärkungselement (18) im Wesentlichen über das gesamte Schwellerinnenteil (11) erstreckt, während sich das Schwellerverlängerungselement (17) wenigstens teilweise entlang des hinteren Bodenlängsträgers (9) vorzugsweise bis zur C-Säule (4), erstreckt und mit diesem und/oder mit der C-Säule (4) verbunden ist.

3. Tragstruktur nach Anspruch 1 oder 2, **dadurch gekennzeichnet, dass** sich das C-Säulenverstärkungselement (16) am C-Säulenbereich im Wesentlichen bis zum Dachbereich (7) erstreckt.

4. Tragstruktur nach einem der Ansprüche 1 bis 3, **dadurch gekennzeichnet, dass** die B-Säule (3) der Fahrzeugkarosserie schwellerseitig an das weitere Schwellerbauteil (17, 18) angebunden ist.

5. Tragstruktur nach einem der Ansprüche 1 bis 4, **dadurch gekennzeichnet, dass** die Fahrzeugkarosserie aus einem Stahlblech oder einem Leichtmetallblech, insbesondere einem Aluminiumblech, aufgebaut ist.

6. Tragstruktur nach einem der Ansprüche 1 bis 5, **dadurch gekennzeichnet, dass** der hintere Bodenlängsträger (9) ein Gussteil, vorzugsweise ein Leichtmetall-Gussteil, höchstbevorzugt ein Aluminium-Gussteil, ist, das mit dem aus einem Stahlblech, insbesondere aus einem warmgeformten Stahlblech gebildeten Schwellerinnenteil (11) verbunden ist, vorzugsweise mittels einer Niet- und/oder Klebeverbindung verbunden ist.

7. Tragstruktur nach einem der Ansprüche 1 bis 6, **dadurch gekennzeichnet, dass** das weitere Schwellerbauteil, insbesondere das Schwellerverlängerungselement (17) und das Schwellerverstärkungselement (18) aus einem Stahlblech, bevorzugt einem hochfesten, kaltgeformten Stahlblech hergestellt ist.

8. Tragstruktur nach einem der Ansprüche 1 bis 7, **dadurch gekennzeichnet, dass** das C-Säulenverstärkungselement (16) aus einem Leichtmetallblech, insbesondere aus einem Aluminiumblech, hergestellt ist.

9. Tragstruktur nach einem der Ansprüche 1 bis 8, **dadurch gekennzeichnet,**
**dass** wenigstens diejenigen miteinander zu verbindenden Bauteile, die aus unterschiedlichen Werkstoffen hergestellt sind, mittels einer Niet- und/oder Klebeverbindung miteinander verbunden sind, und
**dass** gegebenenfalls die miteinander zu verbindenden Bauteile aus einem gleichen Werkstoff mittels Schweißen miteinander verbunden sind.

## Claims

1. Support structure for a vehicle body in the region of the door sill of a C-pillar, having a C-pillar and a rear bottom longitudinal support viewed in the vehicle's longitudinal direction, **characterised in that** to form a first load path (13, 14) on the side of the door sill, the rear bottom longitudinal support (9), viewed in the vehicle's longitudinal direction and stretching out from a rear-side region (10), viewed on the door sill side, is fastened to the C-pillar (4) and extends further forward from that point toward the passenger compartment and is connected in the region of the B-pillar (3) with a door sill inner section (11) in such a way that the bottom longitudinal support (9) encompasses and overlaps a rear, free end of the door sill inner section (11) on the B-pillar-side, wherein the door sill inner section (11) extends forward to the A-pillar (2) and is fastened there to the lower A-pillar region,
a C-pillar reinforcement element (16) is further fastened to the C-pillar (4), in particular opposite the rear bottom longitudinal support (9), which at least in places covers and/or reinforces the C-pillar (4) and, to form a second load path (20, 21) on the door sill side, is connected with an additional door sill component (17, 18), wherein
the additional door sill component is a door sill extension element (17), which merges into a door sill reinforcement element (18) with a uniform material and integrally or, as a separate component, is connected directly or indirectly with a door sill reinforcement element (18),
and wherein the door sill reinforcement element (18) is connected with the door sill inner section (11) and/or the A-pillar (2) of the vehicle body, and the door sill extension element (17) is encompassed or crossed by the C-pillar reinforcement element (16), at least in the region close to the C-pillar, in places and/or in a form-fitting manner.

2. Support structure according to claim 1, **characterised in that** the door sill reinforcement element (18) extends substantially over the entire door sill inner section (11), while the door sill extension element (17), at least partially along the rear bottom longitudinal support (9) and preferably up to the C-pillar (4), extends and is connected with said section and/or with the C-pillar (4).

3. Support structure according to claim 1 or 2, **characterised in that** the C-pillar reinforcement element (16) extends substantially up to the roof area (7) in the C-pillar region.

4. Support structure according to any one of claims 1 to 3, **characterised in that** the B-pillar (3) of the vehicle body on the door sill side is fastened to the additional door sill component (17, 18).

5. Support structure according to any one of claims 1 to 4, **characterised in that** the vehicle body is constructed of a steel sheet or a light metal sheet, in particular an aluminum sheet.

6. Support structure according to any one of claims 1 to 5, **characterised in that** the rear bottom longitudinal support (9) is a casting, preferably a light metal casting, most preferably an aluminum casting, which is connected with the door sill inner section (11) formed of a steel sheet, in particular a hot-formed steel sheet, preferably by means of a riveted and/or adhesive connection.

7. Support structure according to any one of claims 1 to 6, **characterised in that** the additional door sill component, in particular the door sill extension element (17) and the door sill reinforcement element (18), is made of a steel sheet, preferably a high-strength, cold-formed steel sheet.

8. Support structure according to any one of claims 1 to 7, **characterised in that** the C-pillar reinforcement element (16) is made of a light metal sheet, in particular an aluminum sheet.

9. Support structure according to any one of claims 1 to 8, **characterised in that**,
at least those components to be connected together that are made of differing materials are connected together by means of a riveted and/or adhesive connection, and
optionally, the components to be connected together made of the same material are connected together by means of welding.

## Revendications

1. Structure de support d'une carrosserie de véhicule dans la zone côté seuil de porte d'un montant C, comprenant un montant C et un longeron de caisse arrière observé dans la direction longitudinale du véhicule, **caractérisée en ce que**, pour réaliser un premier trajet de charge côté seuil de porte (13, 14), le longeron de caisse arrière (9) observé dans la direction longitudinale du véhicule et partant d'une zone côté lunette arrière (10), est relié, observé côté seuil de porte, au montant C (4) et s'étend de là à nouveau vers l'avant dans la direction du compartiment passagers et est raccordé, dans la zone du montant B (3), à une partie interne (11) du seuil de porte en sorte que le longeron de caisse (9) enveloppe et chevauche une extrémité arrière libre côté montant B de la partie interne (11) du seuil de porte, dans lequel la partie interne (11) du seuil de porte s'étend encore vers l'avant jusqu'au montant A (2) et s'y relie à la zone inférieure du montant A,
**en ce qu'**au montant C (4) est encore relié, en particulier en regard du longeron de caisse arrière (9), un élément de renfort (16) pour le montant C (4), qui recouvre et/ou renforce le montant C au moins par segments et qui est relié à un autre composant de seuil de porte (17,18) pour réaliser un second trajet de charge (20, 21) côté seuil de porte, dans laquelle :
l'autre composant de seuil de porte est un élément de prolongement de seuil de porte (17) qui se convertit en un élément de renfort de seuil de porte (18) venu de matière et d'un seul tenant ou qui est relié directement ou indirectement comme composant séparé à un élément de renfort de seuil de porte (18), et dans lequel :
l'élément de renfort de seuil de porte (18) est relié à la partie interne de seuil de porte (11) et/ou au montant A (2) de la carrosserie du véhicule et l'élément de prolongement de seuil de porte (17) est enveloppé ou recouvert par l'élément de renfort de montant C (16) au moins dans la zone proche du montant C par segments et/ou par adaptation de formes.

2. Structure de support selon la revendication 1, **caractérisée en ce que** l'élément de renfort de seuil de porte (18) s'étend sensiblement sur la totalité de la partie interne (11) du seuil de porte, tandis que l'élément de prolongement de seuil de porte (17) s'étend au moins en partie le long du longeron de caisse arrière (9), de préférence jusqu'au montant C (4), et est relié à celui-ci et/ou au montant C (4).

3. Structure de support selon la revendication 1 ou 2, **caractérisée en ce que** l'élément de renfort de montant C (16) s'étend dans la zone du montant C sensiblement jusqu'à la zone de toit (7).

4. Structure de support selon l'une quelconque des revendications 1 à 3, **caractérisée en ce que** le montant B (3) de la carrosserie du véhicule est relié côté seuil de porte à l'autre composant (17,18) du seuil de porte.

5. Structure de support selon l'une quelconque des revendications 1 à 4, **caractérisée en ce que** la carrosserie du véhicule est constituée d'une tôle d'acier ou d'une tôle de métal léger, en particulier d'une tôle d'aluminium.

6. Structure de support selon l'une quelconque des revendications 1 à 5, **caractérisée en ce que** le longeron de caisse arrière (9) est une pièce moulée, de préférence une pièce moulée de métal léger, bien mieux encore une pièce moulée d'aluminium, qui est reliée à la partie interne (11) du seuil de porte formée d'une tôle d'acier, en particulier formée d'une tôle d'acier façonnée à chaud, de préférence reliée au moyen d'une liaison rivetée et/ou collée.

7. Structure de support selon l'une quelconque des revendications 1 à 6, **caractérisée en ce que** l'autre composant de seuil de porte, en particulier l'élément de prolongement (17) du seuil de porte, et l'élément de renfort (18) du seuil de porte sont constitués d'une tôle d'acier, de préférence d'une tôle d'acier de grande résistance façonnée à froid.

8. Structure de support selon l'une quelconque des revendications 1 à 7, **caractérisée en ce que** l'élément de renfort (16) du montant C est constitué d'une tôle de métal léger, en particulier d'une tôle d'aluminium.

9. Structure de support selon l'une quelconque des revendications 1 à 8, **caractérisée en ce que** :
au moins les composants à relier les uns aux autres, qui sont constitués de différents matériaux, sont reliés les uns aux autres par une liaison rivetée et/ou collée, et
éventuellement les composants à relier les uns aux autres qui sont constitués d'un même matériau sont reliés les uns aux autres par soudure.
